(19) Europäisches Patentamt
European Patent Office
Office européen des brevets

(11) **EP 4 568 253 A1**

(12) **EUROPEAN PATENT APPLICATION**

(43) Date of publication:
**11.06.2025 Bulletin 2025/24**

(21) Application number: **23307152.1**

(22) Date of filing: **06.12.2023**

(51) International Patent Classification (IPC):
**H04N 19/85** (2014.01)

(52) Cooperative Patent Classification (CPC):
**H04N 19/85**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **ATEME**
**78140 Velizy Villacoublay (FR)**

(72) Inventors:
• **RIVIERE, Marc**
  **35340 Ercé-Près-Liffre (FR)**
• **LAVAUD, Anne-Lyse**
  **92240 Malakoff (FR)**
• **GUIONNET, Thomas**
  **35235 Thorigné-Fouillard (FR)**

(74) Representative: **Plasseraud IP**
**104 Rue de Richelieu**
**CS92104**
**75080 Paris Cedex 02 (FR)**

(54) **METHOD FOR IMAGE PROCESSING AND APPARATUS FOR IMPLEMENTING THE SAME**

(57) A method of processing input image data of a set of images to be encoded is proposed, which comprises: obtaining depth data of the input image data, performing a first data processing on the input image data based on the depth data of the input image data, wherein the first data processing is performed as part of an image encoding workflow of data processing for encoding the input image data, performing a second data processing on the input image data based on the depth data of the input image data, wherein the second data processing is performed as part of the image encoding workflow, and encoding the input image data according to the image encoding workflow based on data output by the first data processing and the second data processing.

FIG. 2

**Description**

The present disclosure relates to the field of image processing, in particular image encoding for video stream compression.

Video data is often source encoded so as to decrease the amount of resources necessary for its transmission and/or storage in memory. Various video coding or compression standards that have been developed over the recent years, such as H.264/AVC, H.265/HEVC or H.266/VVC, may be used for that purpose.

Image encoding, such as for example for video stream compression, typically involves multiple image processing operations (functions), each one presenting its own challenges, notably with respect to computation complexity and management of computational resources.

The use of machine learning algorithms have recently been contemplated for addressing one or more of these image processing operations (functions), and specific machine learning algorithms have been developed for leveraging the support provided by artificial intelligence for respective image processing operations (functions). In video encoding systems using a plurality of image processing operations (functions) that each use a respective machine learning algorithm, this may result in a cumulative computational requirement that goes beyond the computational capacities of the encoding system.

Therefore it is desirable to improve the efficiency of video encoding/compression of video data with multiple image processing operations (functions) that are configured to use respective machine learning algorithms.

There is therefore a need for providing an improved image processing scheme and image encoder and/or decoder implementing the same that address at least some of the above-described drawbacks and shortcomings of the conventional technology in the art.

It is an object of the present subject disclosure to provide an improved image processing scheme and apparatus implementing the same that address at least some of the above-described drawbacks and shortcomings of the conventional technology in the art.

Another object of the present subject disclosure is to provide an improved image encoding or compression and/or image decoding or decompression scheme and apparatuses implementing the same that address at least some of the above-described drawbacks and shortcomings of the conventional technology in the art.

Yet another object of the present subject disclosure is to provide an improved video encoding or compression and/or video decoding or decompression scheme and apparatuses implementing the same that address at least some of the above-described drawbacks and shortcomings of the conventional technology in the art.

Yet another object of the present subject disclosure is to provide an improved image encoding and/or decoding scheme and apparatuses implementing the same for alleviating the above-described drawbacks and shortcomings of conventional image encoding/decoding schemes, in particular with respect to image encoding/decoding schemes of input image data to be encoded using a plurality of image processing operations (functions) that use respective machine learning algorithms.

Yet another object of the present subject disclosure is to provide an improved video encoding and/or decoding scheme and apparatuses implementing the same for alleviating the above-described drawbacks and shortcomings of conventional video encoding/decoding schemes, in particular with respect to video encoding/decoding schemes of an input video stream to be encoded using a plurality of image processing operations (functions) that use respective machine learning algorithms.

To achieve these objects and other advantages and in accordance with the purpose of the present subject disclosure, as embodied and broadly described herein, in one aspect of the present subject disclosure, a method for processing input image data of a set of images to be encoded is proposed. The proposed method comprises: obtaining depth data of the input image data, performing a first data processing on the input image data based on the depth data of the input image data, wherein the first data processing is performed as part of an image encoding workflow of data processing for encoding the input image data, performing a second data processing on the input image data based on the depth data of the input image data, wherein the second data processing is performed as part of the image encoding workflow, and encoding the input image data according to the image processing workflow based on data output by the first data processing and the second data processing.

The present subject disclosure advantageously leverages the use of depth data as a common denominator that can facilitate various data processing operations used in an image encoding workflow. Depth information of an image is recognized as a key information that is common to several processing operations of an image encoding workflow that may, depending on the embodiment, include one or more of video pre-processing operations, analysis operations, rate control operations and encoding operations (including core coding decisions made by an encoding core).

Advantageously, in one or more embodiments, the depth data of input image data may be determined using a machine learning algorithm configured for determining a prediction of depth data based on data of input image data.

In such embodiments, one machine learning engine can be specifically configured (including trained) for determining depth data given data of input image data, instead of having a plurality of machine learning models, each configured to perform respectively specific tasks. This leads to a drastic reduction of computational complexity for a given precision, which allows reaching better trade-offs between precision versus computational complexity.

By using depth information as a common basis generated by a machine learning algorithm for a plurality of data processing operations performed as part of the encoding of input image data, the benefits of using a machine learning algorithm for computational performances are spread over the plurality of data processing operations, while also sharing among these data processing operations the computational costs associated with using a machine learning algorithm.

As described in the present subject disclosure, computationally light depth data conversion schemes can advantageously be used so that converted depth data can be used as input data to one or more of the plurality of data processing operations, thereby advantageously ensuring backward compatibility of an improved encoding system implementing a method as proposed in the present subject disclosure through one or more respective depth data conversion functions.

In one or more embodiments, the proposed method may further comprise: obtaining a depth map of the input image data. The depth data may be comprised in the depth map.

In one or more embodiments, the proposed method may further comprise: determining a prediction of depth data of the input image data using a machine learning algorithm. The depth data of the input image data may be based on the prediction of the depth data.

In one or more embodiments, the proposed method may further comprise: performing a training phase of the machine learning algorithm during which the algorithm is provided with input training data comprising input data and corresponding depth data previously calculated.

In some embodiments, the machine learning algorithm may be configured for monocular depth estimation based on data of the input image data.

In one or more embodiments, each of the first and second data processing may be of a type comprised in a set comprising video pre-processing, pre-analysis processing, rate control processing, and encoding core processing.

In one or more embodiments, the proposed method may further comprise: performing a first data conversion of data of the depth data to generate first converted depth data. The first converted depth data may be inputted to the first data processing of the input image data.

In one or more embodiments, the proposed method may further comprise: performing a second data conversion of data of the depth data to generate second converted depth data. The second converted depth data may be inputted to the second data processing of the input image data.

In one or more embodiments, the proposed method may further comprise: processing the depth data for generating processed depth data usable as input data for performing one or more of the first data processing and the second data processing of the input image data.

In some embodiments, processing the depth data may comprise: segmenting the depth data.

In some embodiments, processing the depth data may comprise: partitioning the depth data to determine a partitioning of the input image data.

In some embodiments, the depth data may be partitioned based on one or more of a homogeneity criterion and a predetermined partitioning scheme for determining a partitioning of the input image data.

In some embodiments, the depth data may be segmented in order to generate segmented depth data that represent a plurality of areas, and the depth data may be partitioned based on the segmented depth data.

In another aspect of the present subject disclosure, an apparatus is proposed, which comprises a processor, and a memory operatively coupled to the processor, wherein the apparatus is configured to perform a method as proposed in the present subject disclosure.

In one or more embodiments, the proposed apparatus may further be configured to obtain depth data of the input image data, to perform a first data processing on the input image data based on the depth data of the input image data, wherein the first data processing is performed as part of an image encoding workflow of data processing for encoding the input image data, to perform a second data processing on the input image data based on the depth data of the input image data, wherein the second data processing is performed as part of the image encoding workflow, and the encoding the input image data according to the image encoding workflow based on data output by the first data processing and the second data processing.

In yet another aspect of the present subject disclosure, a video encoder is proposed, which is configured to encode video content comprising a plurality of images, and comprises an apparatus as proposed in the present subject disclosure configured to perform a method as proposed in the present subject disclosure.

In yet another aspect of the present subject disclosure, a non-transitory computer-readable medium encoded with executable instructions which, when executed, causes an apparatus comprising a processor operatively coupled with a memory, to perform a method as proposed in the present subject disclosure, is proposed.

For example, in embodiments, the present subject disclosure provides a non-transitory computer-readable medium encoded with executable instructions which, when executed, causes an apparatus comprising a processor operatively coupled with a memory, to process an image, a digital video frame, or more generally digital video data, by performing the obtaining, by the processor, depth data of the input image data, performing, by the processor, a first data processing on the input image data based on the depth data of the input image data, wherein the first data processing is performed as part of an image encoding workflow of data processing for encoding the input image data, performing, by the processor, a second data processing on the input image data based on the depth data of the input image data, wherein the second data processing is performed as part of the image encoding workflow, and encoding, by the processor, the input image data according to the image encoding workflow based on data output by the first data processing and the second data processing.

In yet another aspect of the present subject disclosure, a computer program product comprising computer program code (tangibly) embodied in a computer readable medium, said computer program code comprising instructions to, when provided to a computer system and executed, cause said computer to perform a method as proposed in the present subject disclosure, is proposed.

In another aspect of the present subject disclosure, a data set representing, for example through compression or encoding, a computer program as proposed herein, is proposed.

It should be appreciated that the present invention can be implemented and utilized in numerous ways, including without limitation as a process, an apparatus, a system, a device, and as a method for applications now known and later developed. These and other unique features of the system disclosed herein will become more readily apparent from the following description and the accompanying drawings.

## Brief description of the drawings

The present subject disclosure will be better understood and its numerous objects and advantages will become more apparent to those skilled in the art by reference to the following drawings, in conjunction with the accompanying specification, in which:

Figure 1 is a block diagram illustrating an exemplary image encoding system configured with an image encoding workflow;

Figure 2 illustrates an exemplary image processing method in accordance with one or more embodiments of the present subject disclosure;

Figure 3 illustrates an exemplary depth map of an image;

Figure 4 is a block diagram illustrating an exemplary improved image encoding system configured with an image encoding workflow in accordance with one or more embodiments of the present subject disclosure;

Figures 5a and 5b illustrate exemplary linear mapping based conversion transforms, and processed depth maps generated by linear mapping transforms in accordance with one or more embodiments of the present subject disclosure;

Figure 5c illustrates an exemplary sigmoid function-based conversion transform and processed depth map generated by sigmoid function processing transform in accordance with one or more embodiments of the present subject disclosure;

Figures 5d and 5e illustrate an exemplary logarithmic and power-based conversion transforms, and processed depth maps generated by logarithmic and power-based conversion transforms processing in accordance with one or more embodiments of the present subject disclosure;

Figure 6 illustrates an exemplary processed depth map generated by segmentation processing in accordance with one or more embodiments of the present subject disclosure;

Figure 7a illustrates exemplary partitioned images using partitioning schemes according to various standard specifications;

Figure 7b illustrates an exemplary partitioned depth map generated by partitioning processing in accordance with one or more embodiments of the present subject disclosure;

Figure 8 illustrates an exemplary apparatus or unit configured to use one or more image processing features in accordance with one or more embodiments of the present subject disclosure.

## Description of embodiments

For simplicity and clarity of illustration, the drawing figures illustrate the general manner of construction, and descriptions and details of well-known features and techniques may be omitted to avoid unnecessarily obscuring the discussion of the described embodiments of the invention. Additionally, elements in the drawing figures are not necessarily drawn to scale. For example, the dimensions of some of the elements in the figures may be exaggerated relative to other elements to help improve understanding of embodiments of the present invention. Certain figures may be shown in an idealized fashion in order to aid understanding, such as when structures are shown having straight lines, sharp angles, and/or parallel planes or the like that under real-world conditions would likely be significantly less symmetric and orderly.

The same reference numerals in different figures denote the same elements, while similar reference numerals may, but do not necessarily, denote similar elements.

In addition, it should be apparent that the teaching herein can be embodied in a wide variety of forms and that any specific structure and/or function disclosed herein is merely representative. In particular, one skilled in the art will appreciate that an aspect disclosed herein can be implemented independently of any other aspects and that several aspects can be combined in various ways.

The present disclosure is described below with reference to functions, units, engines, block diagrams and flowchart illustrations of the methods, systems, and computer program according to one or more exemplary embodiments. Each described function, unit, engine, block of the block diagrams and flowchart illustrations can be implemented in hardware, software, firmware, middleware, microcode, or any suitable combination thereof. If implemented in software, the functions, units, engines, blocks of the block diagrams and/or flowchart illustrations can be implemented by computer program instructions or software code, which may be stored or transmitted over a computer-readable medium, or loaded onto a general purpose computer, special purpose computer or other programmable data processing apparatus to produce a machine, such that the computer program instructions or software code which execute on the computer or other programmable data processing apparatus, create the means for implementing the functions described herein.

Embodiments of computer-readable media includes, but are not limited to, both computer storage media and communication media including any medium that facilitates transfer of a computer program from one place to another. As used herein, a "computer storage media" may be any physical media that can be accessed by a computer or a processor. In addition, the terms "memory" and "computer storage media" include any type of data storage device, such as, without limitation, a hard drive, a flash drive or other flash memory devices (e.g. memory keys, memory sticks, key drive), CD-ROMs or other optical data storage devices, DVDs, magnetic disk data storage devices or other magnetic data storage devices, data memory components, RAM, ROM and EEPROM memories, memory cards (smart cards), solid state drive (SSD) memories, and any other form of medium able to be used to transport or store or memorize data or data structures able to be read by a computer processor, or a combination thereof. Furthermore, various forms of computer-readable media may transmit or carry instructions to a computer, such as a router, a gateway, a server, or any data transmission equipment, whether this involves wired transmission (via coaxial cable, optical fibre, telephone wires, DSL cable or Ethernet cable), wireless transmission (via infrared, radio, cellular, microwaves) or virtualized transmission equipment (virtual router, virtual gateway, virtual tunnel end, virtual firewall). According to the embodiments, the instructions may comprise code in any computer programming language or computer program element, such as, without limitation, the languages of assembler, C, C++, Visual Basic, HyperText Markup Language (HTML), Extensible Markup Language (XML), HyperText Transfer Protocol (HTTP), Hypertext Preprocessor (PHP), SQL, MySQL, Java, JavaScript, JavaScript Object Notation (JSON), Python, and bash scripting.

Unless specifically stated otherwise, it will be appreciated that throughout the following description discussions utilizing terms such as processing, computing, calculating, determining, or the like, refer to the action or processes of a computer or computing system, or similar electronic computing device, that manipulate or transform data represented as physical, such as electronic, quantities within the registers or memories of the computing system into other data similarly represented as physical quantities within the memories, registers or other such information storage, transmission or display devices of the computing system.

The terms "comprise," "include," "have," and any variations thereof, are intended to cover a non-exclusive inclusion, such that a process, method, article, or apparatus that comprises a list of elements is not necessarily limited to those elements, but may include other elements not expressly listed or inherent to such process, method, article, or apparatus.

The terms "video pre-processing" as used in the present subject disclosure refer to any data processing (including generation) performed on image data of an image of a video stream for changing a feature of such video stream prior to encoding such image by an encoding core (e.g. a video encoder or a video codec), such as for example compliant with any of the H.261, MPEG-1 Part 2, H.262, MPEG-2 Part 2, Alliance for Open Media (AOM) AV1, H.264/AVC, H.265/HEVC, MPEG-4 Part 2, SHVC (Scalable HEVC), H.266/VVC, and MPEG-5 EVC specifications or standards, whether in their existing versions and/or their evolutions. Depending on the embodiment, video pre-processing may include one or more pre-processing for source cleaning, resolution change, frame rate change, and bit depth change of images of an input video stream.

The terms "image pre-analysis" or "pre-analysis" as used in the present subject disclosure refer to any data processing performed on image data of an image for analysis of the image prior to encoding such image by an encoding core (e.g. a video encoder or a video codec), such as for example compliant with any of the H.261, MPEG-1 Part 2, H.262, MPEG-2 Part 2, Alliance for Open Media (AOM) AV1, H.264/AVC, H.265/HEVC, MPEG-4 Part 2, SHVC (Scalable HEVC), H.266/VVC, and MPEG-5 EVC specifications or standards, whether in their existing versions and/or their evolutions. Depending on the embodiment, image pre-analysis may include one or more pre-analysis processing for complexity analysis, logo analysis, face detection analysis, and noise (e.g. grain) analysis of input image data.

The terms "rate control" as used in the present subject disclosure refer to any data processing performed on image data of an image for generating decision-related information prior to encoding such image by an encoding core (e.g. a video encoder or a video codec) configured for decision-based encoding, such as for example compliant with any of the H.261, MPEG-1 Part 2, H.262, MPEG-2 Part 2, Alliance for Open Media (AOM) AV1, H.264/AVC, H.265/HEVC, MPEG-4 Part 2, SHVC (Scalable HEVC), H.266/VVC, and MPEG-5 EVC specifications or standards, whether in their existing versions and/or their evolutions. Depending on the embodiment, rate control may include one or more processing for generating (codec agnostic or specific) decision-related information including quantization parameters, psychovisual tunings, picture type decisions, and scene-cut decisions based on data of input image data.

Additionally, the word "exemplary" is used herein to mean "serving as an example, instance, or illustration". Any embodiment or design described herein as "exemplary" is not necessarily to be construed as preferred or advantageous over other embodiments or designs. The terms "in particular", "for example", "example", "typically" are used in the present description to denote examples or illustrations of non-limiting embodiments that do not necessarily correspond to preferred or advantageous embodiments with respect to other possible aspects or embodiments.

The terms "operationally coupled", "coupled", "mounted", "connected" and their various variants and forms used in the present description refer to couplings, connections and mountings that may be direct or indirect, and comprise in particular connections between electronic equipment or between portions of such equipment that allow operations (functions) and modes of operation as described in the present description. In addition, the terms "connected" and "coupled" are not limited to physical or mechanical connections or couplings. For example, an operational coupling may include one or more wired connection(s) and/or one or more wireless connection(s) between two or more items of equipment that allow simplex and/or duplex communication links between the equipment or portions of the equipment. According to another example, an operational coupling or a connection may include a wired-link and/or wireless coupling for allowing data communications between a server of the proposed system and another item of equipment of the system.

The methods proposed in the present subject disclosure may be implemented by any image encoding workflow or image processing workflow which comprises one or more video encoders or video codecs configured for encoding and/or decoding images (or frames) of input video data, such as, for example a video encoder and/or decoder compliant with any of the H.261, MPEG-1 Part 2, H.262, MPEG-2 Part 2, Alliance for Open Media (AOM) AV1, H.264/AVC, H.265/HEVC, MPEG-4 Part 2, SHVC (Scalable HEVC), H.266/VVC, and MPEG-5 EVC specifications or standards, whether in their existing versions and/or their evolutions, as the case may be adapted for implementing one or more embodiments of the proposed methods.

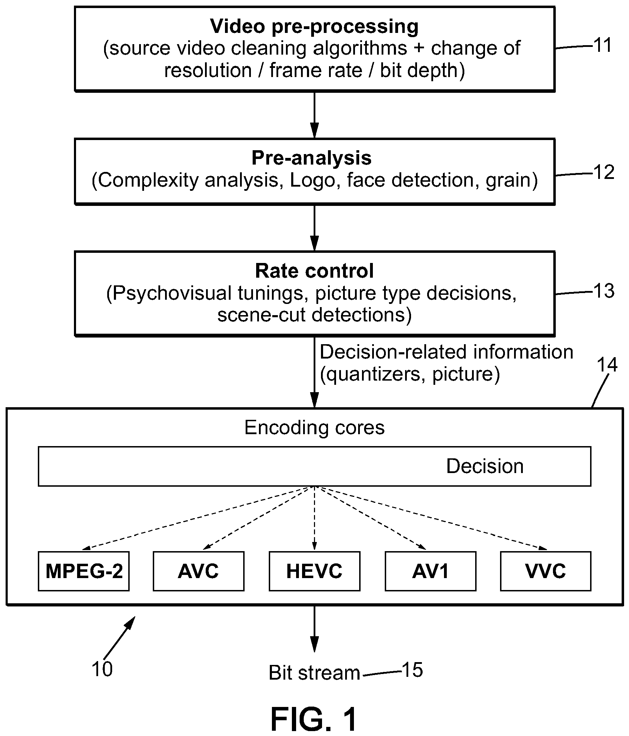

Fig. 1 shows an exemplary image encoding system configured with an image encoding workflow.

Shown on Fig. 1 is an image encoding system 10 which comprises an exemplary image encoding workflow comprising an exemplary sequence of engines performing one or more functions.

It will be appreciated that the image encoding workflow shown and described with reference to Fig. 1 is provided by way of example only. Numerous other architectures, and configurations are possible. Other embodiments of the image encoding workflow of the image encoding system may include fewer or greater number of engines (components) and may incorporate some or all of the functionalities described with respect to the components shown in Fig. 1.

For example, depending on the embodiment, the image encoding workflow shown on Fig. 1 may include fewer or more engines, which may be configured in any suitable order, thereby creating an image encoding workflow sequence. The image encoding workflow sequence 11 - 12 - 13 - 14 shown on Fig. 1 is provided by way of example only.

In some embodiments, the image encoding workflow may comprise a video pre-processing engine 11 which, depending on the embodiments, may be configured for performing one or more video pre-processing operations (functions) of a set of video pre-processing operations (functions) which, depending on the embodiment, may for example comprise source cleaning, change of image resolution, change of image frame rate, and change of image bit depth.

In some embodiments, the video pre-processing engine 11 may be configured to use, as input data, data of input image data received as input by the image encoding system 10 for encoding by the image encoding workflow.

In some conventional encoding/decoding schemes, such as specified for the AV1 video codec specified by the Alliance for Open Media (AOM), certain information, such as for example noise information (e.g. grain information) contained in input image data (for example of an input video) is not directly encoded, together with other data in the input image data, but instead processed using an analysis/synthesis processing.

Using an analysis/synthesis method allows using a specific compression scheme for compressing such information, for example through a parametric model of the information to be compressed. Once analyzing information in input image data has provided estimates of parameters of the model, the information can be removed from the input image data prior to encoding such image using the chosen encoding scheme (e.g. AV1). The process of removing noise information is sometimes referred to as "denoising", and the image, video, or content from which the noise has been removed is referred to as "denoised". The efficiency of the encoding scheme can be preserved by only encoding the denoised input image data or video, while the encoded stream resulting from the encoding of the input image data or video comprises the compressed or encoded image or video, together with the corresponding noise parameters.

In some embodiments, the image encoding workflow may comprise a pre-analysis engine 12 which, depending on the embodiments, may be configured for performing one or more pre-analysis operations (functions) of a set of pre-analysis operations (functions) which, depending on the embodiment, may for example comprise complexity analysis, logo analysis, face detection analysis, and noise (e.g. grain) analysis.

In some embodiments, the pre-analysis engine 12 may be configured to use as input data image data which is output by the video pre-processing engine 11, so that video pre-processing may be performed prior to pre-analysis.

In some embodiments, the image encoding workflow may comprise a rate control engine 13 which, depending on the embodiments, may be configured for performing one or more rate control operations (functions) of a set of rate control operations (functions) which, depending on the embodiment, may for example comprise psychovisual tunings, picture type decisions, and scene-cut detections.

In some embodiments, the rate control engine 13 may be configured to use as input data image data which is output by the pre-analysis engine 11, so that pre-analysis may be performed prior to rate control.

In some embodiments, the image encoding workflow comprises an encoding cores engine 14 which, depending on the embodiments, may be configured for performing one or more encoding core operations (functions) of a set of encoding cores which, depending on the embodiment, may for example comprise an MPEG-2 encoding core, and AVC encoding core, and HEVC encoding core, and AV1 encoding core, and a WC encoding core.

In some embodiments, the encoding cores engine 14 may be configured to use, as input data, data which is output by the rate control engine 13, so that rate control may be performed prior to the encoding of the input image data by one or more of the encoding cores of the encoding cores engine 14. In some embodiments, the encoding cores engine 14 may be configured to use, as input data, decision-related data (e.g. comprising one or more of quantization data, picture type data, etc.) which is output by the rate control engine 13, so that the encoding of the input image data by one or more of the encoding cores of the encoding cores engine 14 may be performed using such decision-related data.

In some embodiments, the encoding cores engine 14 may be configured to output a bitstream that corresponds to the result of the encoding of the input image data by the image encoding workflow of the image encoding system 10.

As illustrated by Fig. 1, an image encoding system may comprise a plurality of image processing engines (11 - 14), each configured for performing image processing operations on an input image data as part of an image encoding workflow.

Each of these processing engines may be configured to use a respective machine learning engine configured for performing a function to be provided by the processing engine.

For example, a processing engine of the image encoding workflow configured for output engine processed data may further be configured to use a machine learning algorithm (e.g. a supervised learning algorithm) for determining predictions of at least some output engine processed data. Using a machine learning algorithm for predicting some of the output data advantageously avoids the need for computing such output data, which is particularly advantageous in embodiments in which such output data is to be computed in real-time or near real-time, for example in the context of live distribution of multimedia content streams.

Each of the machine learning algorithm may require to be trained through a training phase during which the algorithm is provided with specific input training data comprising input data as well as corresponding output engine processed data previously calculated.

For example, the video pre-processing engine (11) may be configured to use one or more machine learning algorithms respectively configured for determining prediction data corresponding to a respective processing function performed by the video pre-processing engine (11). For example, the video pre-processing engine (11) may be configured to use one or more of a first machine learning algorithm configured for determining prediction data corresponding to the result of a source cleaning processing applied to input data received by the video pre-processing engine (11), a second machine learning algorithm configured for determining prediction data corresponding to the result of a resolution change processing applied to input data received by the video pre-processing engine (11), a third machine learning algorithm configured for determining prediction data corresponding to the result of a frame rate change processing applied to input data received by the video pre-processing engine (11), and a fourth machine learning algorithm configured for determining prediction data corresponding to the result of a bit depth change processing applied to input data received by the video pre-processing engine (11).

For example, the pre-analysis engine (12) may be configured to use one or more machine learning algorithms respectively configured for determining prediction data corresponding to a respective processing function performed by the pre-analysis engine (12). For example, the pre-analysis engine (12) may be configured to use one or more of a first machine learning algorithm configured for determining prediction data corresponding to the result of a complexity analysis processing applied to input data received by the pre-analysis engine (12), a second machine learning algorithm configured for determining prediction data corresponding to the result of a logo analysis processing applied to input data received by the pre-analysis engine (12), a third machine learning algorithm configured for determining prediction data corresponding to the result of a face detection processing applied to input data received by the pre-analysis engine (12), and a fourth machine learning algorithm configured for determining prediction data corresponding to the result of a grain analysis processing applied to input data received by the pre-analysis engine (12).

As another example, the rate control engine (13) may be configured to use one or more machine learning algorithms respectively configured for determining prediction data corresponding to a respective processing function performed by the rate control engine (13). For example, the rate control engine (13) may be configured to use one or more of a first machine learning algorithm configured for determining prediction data corresponding to the result of a psychovisual tunings processing applied to input data received by the rate control engine (13), a second machine learning algorithm configured for determining prediction data corresponding to the result of a picture type decision processing applied to input data received by the rate control engine (13), and a third machine learning algorithm configured for determining prediction data corresponding to the result of a scene-cut detection processing applied to input data received by the rate control engine (13).

As yet another example, one or more of the encoding cores of the encoding cores engine (14) may be configured to use one or more machine learning algorithms respectively configured for determining prediction data corresponding to a respective encoding function performed by the encoding core.

Each of the machine learning engines that may be implemented for a specific processing or a specific function used in the image encoding workflow may be specifically configured (including trained) for determining predictions related to such specific processing or function, and the use thereof may incur an additional computational cost. However, as a consequence of the use in the image encoding workflow of a plurality (and a potentially large number) of machine learning engines that are specifically configured for use in the determination of output data related to a corresponding specific processing or function, the cumulative computational cost of these machine learning engines may become very high, to the point where, depending on the computational resources available in the image encoding system, a selection of those of the machine learning engines that are available may be performed in order to decrease the cumulative computational cost thereof, or a selection may be made among the processing or functions available in the image encoding workflow in order to stay within the computational limits of the system, potentially in view of constraints such as real-time or near real-time processing.

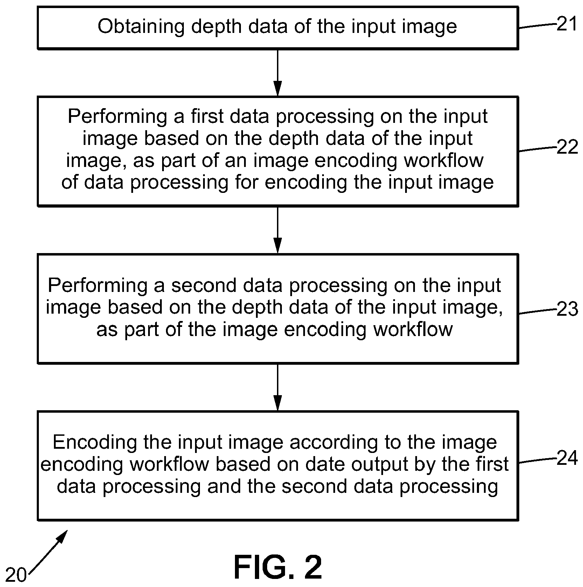

Figure 2 illustrates an exemplary image processing method 20 according to one or more embodiments of the present subject disclosure.

Video data (comprising an image or (depending on the processing) a set of images) which is to be processed for encoding, for example of a video sequence or more generally of a media stream (an image of a video sequence may sometimes be referred to as a "video frame"), is considered as input of the proposed method, and may be indifferently referred to in the following as the "original" image/video, the "input" image/video, the "input image data", the "original video data," or simply the "input data" In embodiments, the input image data may be processed for encoding as part of the video encoding of a video sequence comprising a plurality of images.

As shown on Fig. 2, in one or more embodiments depth data of the input image data may be obtained (21).

Depending on the embodiment, the depth data of the image may be received from depth data processing engine or may be determined by the image encoding system implementing the proposed method.

In one or more embodiments, the depth data of the image may be used to perform (22) a first data processing on the image.

In some embodiments, the first data processing may be comprised in an image encoding workflow of data processing for encoding the input image data. For example, the first data processing may be performed as part of an image encoding workflow of data processing for encoding the input image data.

Depending on the embodiment, the first data processing may be of any type comprised in a set comprising video pre-processing, pre-analysis processing, rate control processing, and encoding core processing. For example, the depth data of the image may be used to perform any one of a video pre-processing of the input image data, a pre-analysis processing of the input image data, a rate control processing of the input image data, or an encoding of the input image data using an encoding core as a first data processing. As illustrated by Fig. 1, the video pre-processing, pre-analysis processing, rate control processing, and encoding core processing may correspond to different types of data processing that may be performed as part of an image encoding workflow.

In one or more embodiments, the depth data of the image may be also used to perform (23) a second data processing on the image.

Depending on the embodiment, the second data processing may be of any type comprised in the set comprising video pre-processing, pre-analysis processing, rate control processing, and encoding core processing. For example, the depth data of the image may be used to perform any one of a video pre-processing of the input image data, a pre-analysis processing of the input image data, a rate control processing of the input image data, or an encoding of the input image data using an encoding core as a second data processing.

Therefore, advantageously, the depth data of the input image data may be used as input data to a plurality of data processing operations performed as part of an image encoding workflow for encoding the input image data.

The present subject disclosure advantageously leverages the use of depth data as a common denominator that can facilitate various data processing operations used in an image encoding workflow.

In one or more embodiments, the input image data may then be encoded (24) according to the image encoding workflow based on data output by the first data processing and the second data processing.

In one or more embodiments, the depth data may be obtained through a depth map of the input image data which is obtained (for example determined based on the input image data).

In some embodiments, a depth map of the input image data may correspond to an image which is spatially aligned to the input image data. Therefore, in some embodiments, a depth map of a natural image may be an image associated with the natural image, with a spatial correspondence between the two images. Depending on the embodiment, the spatial correspondence may comprise a pixel-to-pixel correspondence between pixels of the natural image and respectively corresponding pixels of the depth map, or may comprise a pixel block-to-pixel correspondence between pixels of the depth map and respectively corresponding pixel blocks of the natural image (e.g. in cases where the depth map has a lower pixel resolution than the natural image).

In some embodiments, a depth map of the input image data may correspond to an array of pixels with pixel values with a given dynamic range, for example natural integers ranging from 0 to a *MaxValue* value (e.g. *MaxValue* = 255). Depending on the embodiment, the pixel values of the depth map may encode a low depth pixel with a high pixel value, or conversely.

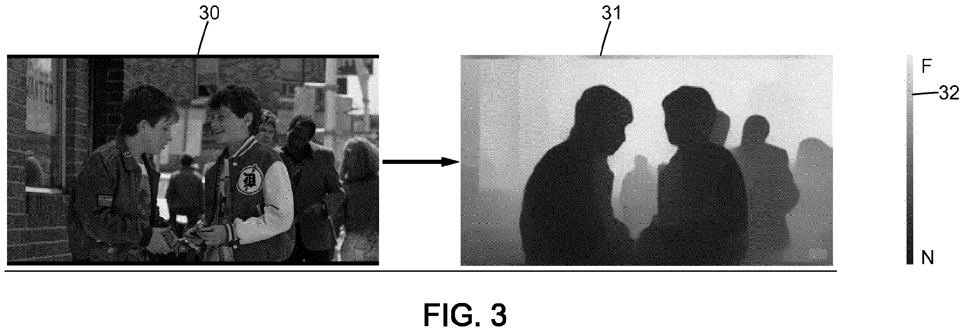

An example of a depth map (31) of input image data (30) is shown on Fig. 3., with a scale (showing that far (high depth) pixels appear light and near (low depth) pixels appear dark).

In one or more embodiments, the depth data of the input image data (e.g. a depth map) may be obtained using a machine learning algorithm, through a prediction of depth data of the input image data determined by a machine learning algorithm.

Embodiments of the proposed method which use a machine learning algorithm may advantageously use a supervised learning algorithm, which is trained during a training phase and then executed during an inference phase.

In some embodiments, the proposed method may further comprise: performing a training phase of the machine learning algorithm during which the algorithm is provided with input training data comprising input data and corresponding depth data previously calculated.

In some embodiments, during a training phase, the machine learning may receive training data comprising reference images and corresponding depth maps for performing a supervised learning. In other embodiments, during a training phase, the machine learning may receive training data comprising pairs of points and corresponding depth data for performing a supervised learning.

In some embodiments, during an inference phase, a machine learning algorithm may be configured to receive input data corresponding to one or more natural images.

In some embodiments, the machine learning algorithm may be configured to generate for each of one or more pixels of an input image data output data comprising an integer value that represents a depth of the pixel of the input image data.

In some embodiments, a supervised learning algorithm may be trained through a training phase during which the algorithm is provided with input training data comprising input data as described above as well as corresponding depth data previously calculated. The training data may be defined based on a set of training multimedia content streams constituting a training dataset, each of which comprising a plurality of training input images and corresponding training depth maps.

In some embodiments, the machine learning algorithm may be a supervised learning algorithm, which is trained on a large number of training video sequences.

Advantageously, the training input images may be chosen with different depth maps.

In one or more embodiment, the machine learning algorithm may be configured for monocular depth estimation based on data of input image data.

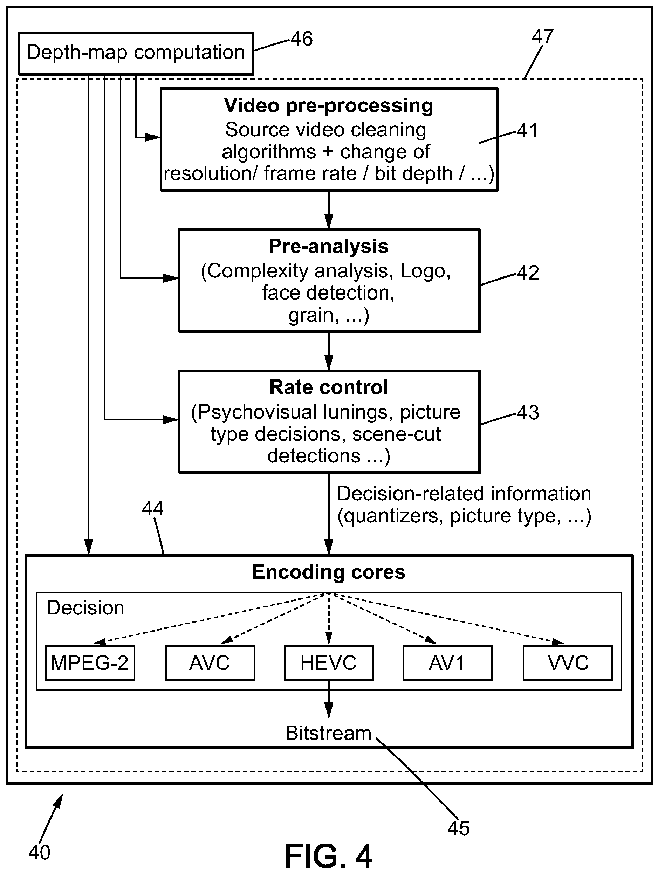

Fig. 4 shows an exemplary improved image encoding system configured with an image encoding workflow according to embodiments of the present subject disclosure.

Shown on Fig. 4 is an improved image encoding system (40) which comprises an exemplary improved image encoding workflow (47) comprising an exemplary sequence of engines performing one or more functions.

It will be appreciated that the image encoding workflow (47) shown and described with reference to Fig. 4 is provided by way of example only. Numerous other architectures, and configurations are possible. Other embodiments of the image encoding workflow of the image encoding system (40) may include fewer or greater number of engines (components) and may incorporate some or all of the functionalities described with respect to the components shown in Fig. 4.

For example, depending on the embodiment, the image encoding workflow (47) shown on Fig. 4 may include fewer or more engines, which may be configured in any suitable order, thereby creating an image encoding workflow sequence. The image encoding workflow sequence (41 - 42 - 43 - 44) shown on Fig. 4 is provided by way of example only.

In some embodiments, the improved image encoding workflow (47) may comprise a video pre-processing engine 11 which, depending on the embodiments, may be configured for performing one or more video pre-processing operations (functions) of a set of video pre-processing operations (functions) which, depending on the embodiment, may for example comprise source cleaning, change of image resolution, change of image frame rate, and change of image bit depth.

In some embodiments, the video pre-processing engine (41) may be configured to use, as input data, data of input image data received as input by the image encoding system (40) for encoding by the improved image encoding workflow (47).

In some embodiments, the improved image encoding workflow (47) may comprise a pre-analysis engine (42) which, depending on the embodiments, may be configured for performing one or more pre-analysis operations (functions) of a set of pre-analysis operations (functions) which, depending on the embodiment, may for example comprise complexity analysis, logo analysis, face detection analysis, and noise (e.g. grain) analysis.

In some embodiments, the pre-analysis engine (42) may be configured to use as input data image data which is output by the video pre-processing engine (41), so that video pre-processing may be performed prior to pre-analysis.

In some embodiments, the improved image encoding workflow (47) may comprise a rate control engine (43) which, depending on the embodiments, may be configured for performing one or more rate control operations (functions) of a set of rate control operations (functions) which, depending on the embodiment, may for example comprise psychovisual tunings, picture type decisions, and scene-cut detections.

In some embodiments, the rate control engine (43) may be configured to use as input data image data which is output by the pre-analysis engine (41), so that pre-analysis may be performed prior to rate control.

In some embodiments, the improved image encoding workflow (47) may comprise an encoding cores engine (44) which, depending on the embodiments, may be configured for performing one or more encoding core operations (functions) of a set of encoding cores which, depending on the embodiment, may for example comprise an MPEG-2 encoding core, and AVC encoding core, and HEVC encoding core, and AV1 encoding core, and a WC encoding core.

In some embodiments, the encoding cores engine (44) may be configured to use, as input data, data which is output by the rate control engine (43), so that rate control may be performed prior to the encoding of the input image data by one or more of the encoding cores of the encoding cores engine (44). In some embodiments, the encoding cores engine (44) may be configured to use, as input data, decision-related data (e.g. comprising one or more of quantization data, picture type data, etc.) which is output by the rate control engine (43), so that the encoding of the input image data by one or more of the encoding cores of the encoding cores engine (44) may be performed using such decision-related data.

In some embodiments, the encoding cores engine (44) may be configured to output a bitstream (45) that corresponds to the result of the encoding of the input image data by the image encoding workflow of the image encoding system (40).

In one or more embodiments, the improved image encoding system (40) may further comprise a depth-map computation engine (46) configured for obtaining (e.g. computing) depth data of input image data (not represented on the figure). As shown on Fig. 4, the depth-map computation engine (46) may in some embodiments be further configured to provide depth data of the input image data as input data to one or more of a video pre-processing engine (41), a pre-analysis engine (42), the rate control engine (43) and the encoding cores engine (44) of the improved encoding workflow (47).

In one or more embodiments, each of the video pre-processing engine (41), pre-analysis engine (42), rate control engine (43), and encoding cores engine (44) of the improved encoding workflow (47) may comprise a respective depth data conversion engine configured for converting depth data received from the depth-map computation engine (46) into data usable for performing one or more of the functions provided by the respective engine (41, 42, 43, 44).

In one or more embodiments, the depth-map computation engine may comprise a machine learning engine configured for depth data (e.g. monocular depth data) estimation based on data of the input image data.

For example, in some embodiments, the depth-map computation engine (46) configured for computing depth data based on data of an input image data may further be configured to use a machine learning algorithm (e.g. a supervised learning algorithm) for determining depth data estimates based on data of the input image data. Using a machine learning algorithm for estimating (e.g. predicting) some of the output data advantageously avoids the need for computing such output data, which is particularly advantageous in embodiments in which such output data is to be computed in real-time or near real-time, for example in the context of live distribution of multimedia content streams. In addition, in the specific case of depth data computation, using machine learning for determining depth data estimates advantageously allows obtaining monocular depth data estimates.

The machine learning algorithm used in the depth-map computation engine (46) may be trained through a training phase during which the algorithm is provided with input training data comprising input data as well as corresponding output engine processed data previously calculated. The training data may be defined based on a set of training images or multimedia content streams constituting a training dataset.

Thanks to identifying that depth data can be commonly used by a plurality of engines of the improved image encoding workflow (47), using the machine learning at the depth data computation level advantageously allows leveraging the benefits while sharing the computational costs of using machine learning among the various engines used in the improved image encoding workflow (47).

Therefore, as compared to the image encoding workflow of Fig. 1 in which in one or more embodiments, each of these processing engines may be configured to use a respective machine learning algorithm, the number of machine learning engines specifically configured for performing a respective data processing function of the image encoding workflow can be reduced to avoid using a potentially large number of specifically configured machine learning engines, each of which involving an additional computational complexity and requirement for computational resources.

In one or more embodiments, one or more conversion functions may be used in order to convert the depth data into data that can be exploited by respective data processing engines, for example for data processing of the input image data without the support of a machine learning engine specifically configured for performing said data processing.

In some embodiments, the depth data may be directly usable by one or more data processing engines of the image encoding workflow, so that such depth data may be directly fed to the one or more data processing engines for use in their respective data processing.

For example, in some embodiments, a depth map obtained based on input image data may be fed to a framerate adaptation data processing engine configured for framerate adaptation based on depth data. In some embodiments, depth data which may be obtained (estimated) using a machine learning algorithm may be fed to a framerate adaptation data processing engine configured for framerate adaptation based on depth data. In some embodiments, as the depth data is generated by a machine learning algorithm, it may be chosen to not use an additional machine learning engine specifically configured for framerate adaptation, for example in particular in view of limited computational resources of the encoding system, in order to save computational resources for other tasks, or in view of real time or near real time computational constraints.

As another example, in some embodiments, a depth map obtained based on input image data may be fed to a rate control (e.g. Quantization Parameter tuning) data processing engine configured for rate control based on depth data. In some embodiments, depth data which may be obtained (estimated) using a machine learning algorithm may be fed to a rate control data processing engine configured for rate control based on depth data. In some embodiments, as the depth data is generated by a machine learning algorithm, it may be chosen to not use an additional machine learning engine specifically configured for rate control (or for a specific rate control function), for example in particular in view of limited computational resources of the encoding system, in order to save computational resources for other tasks, or in view of real time or near real time computational constraints.

In one or more embodiments, the proposed method may further comprise: performing a first data conversion of data of the depth data to generate first converted depth data to be used as input data which is inputted to a first data processing of the input image data.

In some embodiments, a plurality of conversion functions may be used, which may respectively correspond to a plurality of data processing engines of the image encoding workflow that may not be configured to operate with the support of a specifically configured machine learning engine.

For example, in some embodiments, the proposed method may further comprise: performing a second data conversion of data of the depth data to generate second converted depth data, and inputting the second converted depth data into a second data processing of the input image data.

Depending on the embodiment, one or more respective conversion functions may be designed and use for one or more of the following data processing functions that may be configured in an image encoding workflow, thereby alleviating the need for a specifically configured machine learning engine for supporting these functions:

In one or more embodiments, the proposed method may further comprise: processing the depth data for generating processed depth data usable as input data for performing one or more of the first data processing and the second data processing of the input image data.

In the following, exemplary conversion functions that may be used for transforming depth data into data usable as input data for various data processing as part of an image encoding workflow such as illustrated on Fig. 4, are described.

In one or more embodiments, depth data (e.g. depth map data) D (in the form of an 2D array $D(x, y)$) obtained for the input image data may be processed in order to generate converted depth data $D\_converted$: $D\_converted = F(D)$.

In some embodiments, the conversion function may be configured to perform a linear mapping transform on the input depth data D.

For example, the conversion function may be configured based on the following:

$$D\_converted(x, y) = clip(a * D(x, y) + b;\ min\_val;\ max\_val)$$

Where *a* is a scaling factor (for example 0.5), *b* is an offset (for example - 64), and *clip* is a clipping function, with *min_val* and *max_val* bounds (for example - 50 and 50 respectively).

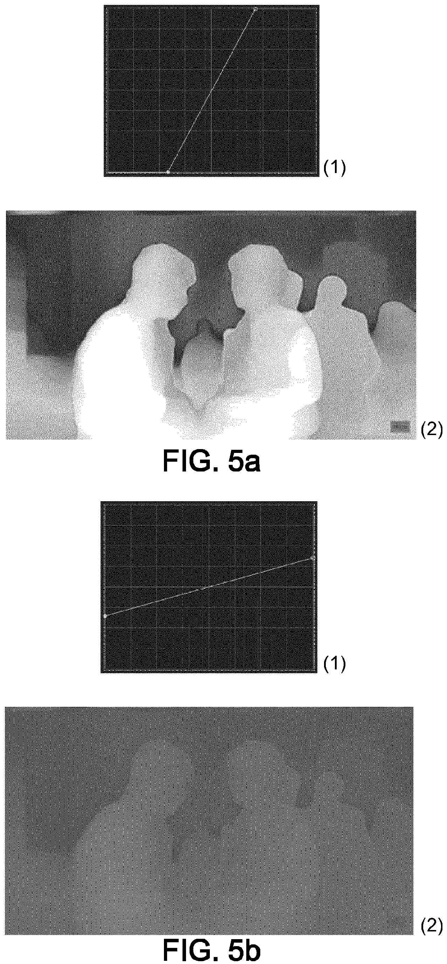

Figures 5a and 5b show exemplary linear mapping based conversion transforms, and processed depth maps generated by linear mapping transforms (performed on the exemplary depth map of figure 3).

Figure 5a (1) (upper part) illustrates a first example of linear mapping-based conversion transform, while Fig. 5a (2) (lower part) illustrates the exemplary depth map of Fig. 3 transformed based on the linear mapping-based conversion transform of Fig. 5a (1).

Figure 5b (1) (upper part) illustrates a second example of linear mapping-based conversion transform, while Fig. 5b (2) (lower part) illustrates the exemplary depth map of Fig. 3 transformed based on the linear mapping-based conversion transform of Fig. 5b (1).

In some embodiments, the conversion function may be configured to perform a S-curve or a sigmoid function transform on the input depth data D. Such conversion functions may advantageously be used to transform the depth data into data related to Quantization Parameter offset parameter (for example as defined in specifications of the VVC standard) that is, into quantization data usable by a core encoder).

For example, the conversion function may be configured based on the *arctan* function as exemplary sigmoid function:

$$D\_converted(x, y) = c * \arctan\left(a * D_{normalized(x,y)} + b\right)$$

Where *D_normalized*(*x, y*) corresponds to normalized depth data, and *a, b* and c are predefined real coefficients.

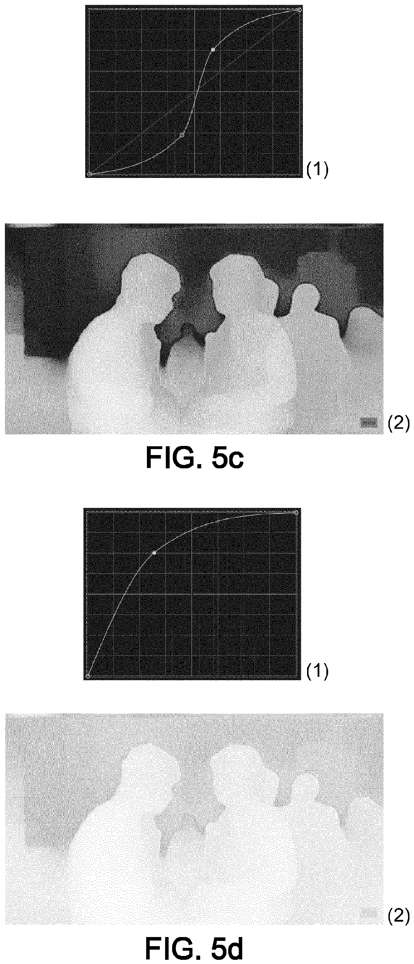

Figure 5c shows an exemplary sigmoid function-based conversion transform and processed depth map generated by sigmoid function processing transform (performed on the exemplary depth map of figure 3).

Figure 5c (1) (upper part) illustrates an example of sigmoid function-based conversion transform, while Fig. 5c (2) (lower part) illustrates the exemplary depth map of Fig. 3 transformed based on the sigmoid function-based conversion transform of Fig. 5c (1).

In some embodiments, the conversion function may be configured to perform a logarithmic or power transform on the input depth data D or, depending on the embodiment, on normalized depth data (computed based on the input depth data).

In some embodiments, the conversion function may be configured to first normalize the depth data (and therefore generate *D_normalized*(*x, y*)), for example between 0 and 1, for example based on the following:

$$D\_normalized(x, y) = D(x, y)/MaxValue$$

In some embodiments, a log/power transform may be performed on the normalized depth data.

For example, the conversion function may be further configured to use the logarithmic function $x \mapsto \log_n(x)$ as exemplary log/power function on the normalized depth data *D_normalized*(*x, y*):

$$D\_converted(x, y) = a * \log_n(D\_normalized(x, y)) + b$$

Where *D_normalized*(*x, y*) corresponds to normalized depth data, *n* is a non-zero natural integer, and *a* and *b* are predefined real coefficients.

As yet another example, the conversion function may be configured to use the integer power function $x \mapsto x^p$ as exemplary log/power function on the normalized depth data *D_normalized*(*x, y*):

$$D\_converted(x, y) = a * D\_normalized(x, y)^p + b$$

Where *D_normalized*(*x, y*) corresponds to normalized depth data, *p* is a natural integer, and *a* and *b* are predefined integer real coefficients.

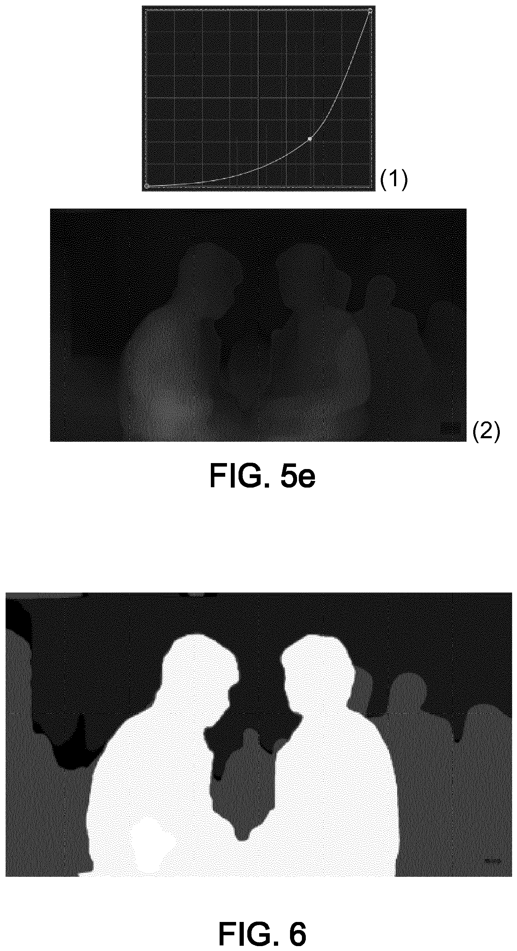

Figures 5d and 5e show exemplary logarithmic and power-based conversion transforms, and processed depth maps generated by logarithmic and power-based conversion transforms (performed on the exemplary depth map of figure 3).

Figure 5d (1) (upper part) illustrates an example of logarithmic function-based conversion transform, while Fig. 5d (2) (lower part) illustrates the exemplary depth map of Fig. 3 transformed based on the logarithmic function-based conversion transform of Fig. 5d (1).

Figure 5e (1) (upper part) illustrates an example of power function-based conversion transform, while Fig. 5e (2) (lower part) illustrates the exemplary depth map of Fig. 3 transformed based on the power function-based conversion transform of Fig. 5e (1).

In one or more embodiments, depth data obtained for the input image data may be segmented in order to generate converted depth data usable as input data to a data processing function that may be configured in an image encoding workflow, such as an object detection function or an image partitioning function.

Therefore, in some embodiments, depth data (e.g. data of a depth map) may be processed, which comprises segmenting the depth data to determine one or more of object segmentation data and object recognition data related to the input image data.

The segmentation may typically comprise identifying arbitrary areas of the input image data, which can advantageously be performed based on the depth data according to the present subject disclosure.

In some embodiments, a depth map may be obtained, and then segmented in order to identify (generate) one or more homogeneous areas of the input image data such as illustrated by Fig. 6. For example, in some embodiments, a histogram segmentation scheme, for example using a Lloyd-Max algorithm, may be used to perform segmentation of a depth map of the input image data.

Fig. 6 shows an exemplary processed depth map generated by segmentation processing.

It will be appreciated by those having ordinary skill in the relevant art that any suitable segmentation scheme may be used in place of the histogram segmentation scheme which is given by way of example only.

In one or more embodiments, the image encoding workflow may include a core encoding engine configured for encoding input image data according to an encoding scheme which is specified in a video encoding standard, such as for example a video encoding core compliant with any of the H.261, MPEG-1 Part 2, H.262, MPEG-2 Part 2, Alliance for Open Media (AOM) AV1, H.264/AVC, H.265/HEVC, MPEG-4 Part 2, SHVC (Scalable HEVC), H.266/VVC, and MPEG-5 EVC specifications or standards, whether in their existing versions and/or their evolutions, as shown in Fig. 4.

In encoding schemes specified in a standard, the images of the video stream to be encoded are typically considered according to an encoding sequence, and are each divided into sets of pixels which are also processed sequentially, for example starting on the top left and finishing on the bottom right of each image. Encoding an image of the stream is thus performed by dividing a pixel matrix corresponding to the image into several sets, for example into blocks with a fixed size of 16 x 16, 32 x 32, or 64 x 64 pixels, and by encoding these blocks of pixels according to the given processing sequence.

Some standards, such as H.264/AVC, provide the possibility of decomposing blocks of 16 x 16 pixels (here referred to as macro-blocks) into sub-blocks, for example with a size of 8 x 8 or 4 x 4, so as to perform the encoding processing with a finer granularity.

The H.265/HEVC standard provides for the use of blocks with a fixed size up to 64 x 64 pixels, wherein these blocks may be partitioned to a minimum size of 8 x 8 pixels. HEVC allows partitioning each current image into blocks with sizes ranging from 64 x 64 pixels to 8 x 8 pixels: The current image (undergoing encoding) is partitioned into CTUs (Coding Tree Units), each containing luma CTBs (Coding Tree Block) and chroma CTBs. HEVC supports variable-size CTBs selected according to the needs of the encoder in terms of memory and computational requirements. The luma CTB and the two chroma CTBs together with the associated syntax form a CTU. The encoder typically chooses a size for the blocks used according to proprietary criterions which are not defined by the HEVC standard. The blocks specified as luma and chroma CTBs can be directly used as coding blocks (CBs) or can be further partitioned into multiple CBs. The partitioning is achieved using tree structures: The HEVC standard uses a quadtree coding structure, combined with a dynamic selection of principal block size. The CTU contains a quadtree syntax that allows for splitting the CBs to a selected appropriate size based on the signal characteristics of the region that is covered by the CTB.

The H.266/VVC standard also provides for the use of blocks with a minimum size of 4 x 4 pixels, and a maximum size of 128 x 128 pixels. The WC standard specifies the so-called multi_type tree MTT, composed of a quadtree structure followed by a mix of binary and ternary structures, which is to be explored in order to progressively determine a partitioning of an image to be encoded according to a specified exploration scheme.

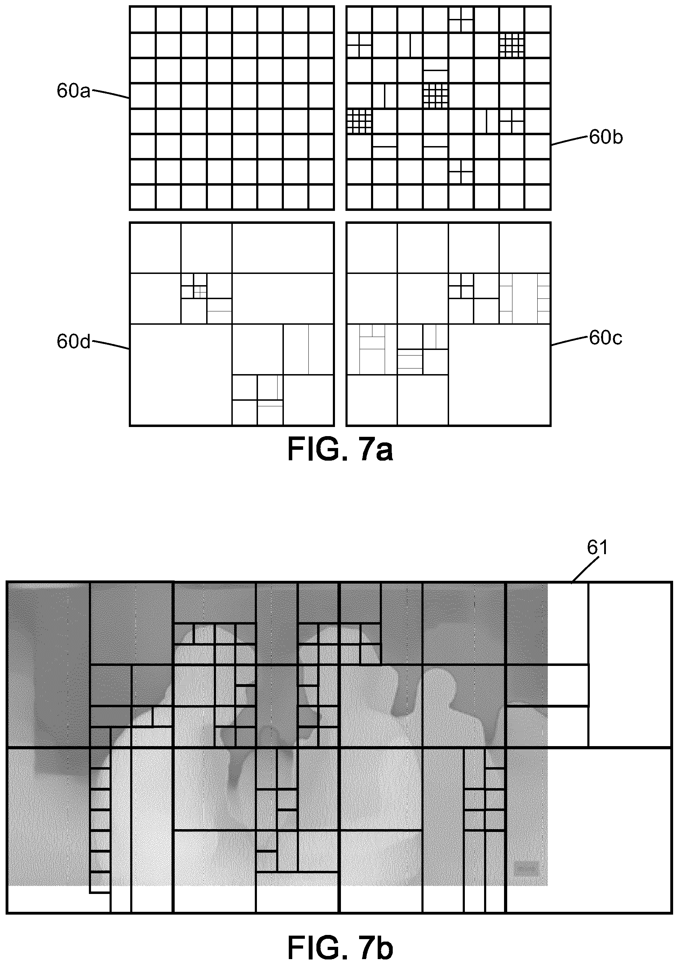

Fig. 7a illustrates exemplary partitioned images (60a, 60b, 60c, 60d) using a partitioning scheme according to the AVC standard, HEVC standard, AV1 standard, and WC standard specifications, respectively.

In one or more embodiments, depth data obtained for the input image data may be processed in order to generate a partitioning of the depth data usable as input data to a data processing function that may be configured in an image encoding workflow, such as for determining a partitioning of the input image data according to an encoding scheme for which a partitioning scheme is specified.

Therefore, in some embodiments, depth data (e.g. data of a depth map) may be processed, which comprises partitioning the depth data to determine a partitioning of the input image data, for example according to a predetermined partitioning scheme.

Depending on the embodiment, the partitioning of the depth data (for example of a depth map) may be performed based on a predetermined partitioning scheme specified for partitioning the input image data to be encoded.

For example, in some embodiments, the partitioning of the depth data (for example of a depth map) may be performed based on the partitioning scheme specified in standard specifications, such as for example the VVC standard specifications.

In some embodiments, a depth map may be obtained, and then partitioned as illustrated by Fig. 7b in order to determine a partitioning usable by a core encoder of the image encoding workflow for encoding the input image data.

Fig. 7b shows an exemplary partitioned depth map generated by partitioning processing.

For example, in some embodiments, a depth map may be obtained, and then partitioned according to a tree partitioning scheme based on one or more of a homogeneity criterion and a predetermined partitioning scheme for determining a partitioning of the input image data.

As another example, in some embodiments, an image segmentation processing may be performed on the depth data to generate segmented depth data (in order to determine uniform areas in the input image data, the segmented depth data representing a plurality of areas of the input image data), and depth-data partitioning may be performed based on the segmented depth data.

In some embodiments, a depth map may be partitioned according to a tree partitioning scheme, such as for example the tree partitioning scheme specified for a video encoding standard (e.g. the HEVC or the WC standard), and dynamic selection of partition blocks may be performed based on a homogeneity criterion. For example, a coding tree unit may be selected based on it fulfilling a given homogeneity criterion.

In some embodiments, the partitioning scheme defined (or specified) for the encoding core to be used downstream the image encoding workflow may be taken into account in the partitioning of depth data (e.g. of a depth map). For example, such partitioning scheme may be used for partitioning the depth map for dynamic selection of partition blocks based on a tree exploration which may select each partition block based on one or more of a criterion (e.g. a homogeneity criterion) being fulfilled and a partitioning scheme constraint (e.g. reaching the smallest block size allowed for the partitioning scheme) being met.

Depending on the embodiment, the homogeneity criterion may comprise one or more of comparing a distance value (*Max - Min*) determined based on the minimum and maximum values of pixels of a candidate block of the depth map to a first predetermined threshold *T*1, and comparing a standard deviation value (*Stddev*) determined based on a standard deviation of values of pixels of a candidate block to a second predetermined threshold T2. Depending on the embodiment, it may be determined that the homogeneity criterion is fulfilled (hence that the candidate block corresponds to a homogeneous area of pixels of the depth map) in cases where it is determined that the distance value is lower than the first threshold (*Max - Min* < *T*1), or in cases where it is determined that the standard deviation value is lower than the second threshold (*Stddev* < *T*2).

In some embodiments, a depth map obtained for the input image data may be segmented into a plurality of areas of the depth map (that respectively correspond to areas of the input image data). The segmentation may advantageously be performed to identify uniform areas of the depth map (and corresponding uniform areas of the input image data). A partitioning scheme may then be used for determining partition blocks in one or more of the areas identified by the segmentation of the depth map.

It will be appreciated by those having ordinary skill in the relevant art that any suitable partitioning scheme may be used in place of the HEVC or the WC partitioning schemes which are given by way of example only.

Performing a partitioning of depth data (e.g. of a depth map) may advantageously provide a pre-partitioning of the input image data that may be usable to the core encoder for encoding the input image data. Therefore partitioning for core encoding may be considered among the various data processing that may benefit from depth data obtained and processed according to embodiments of the present subject disclosure.

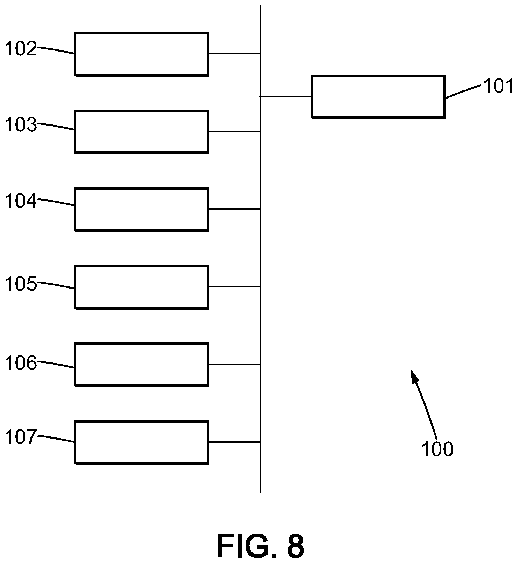

Fig. 8 illustrates an exemplary architecture of an apparatus 100 configured to use data processing features in accordance with embodiments of the present subject disclosure. The apparatus 100 may, depending on the embodiment, be comprised in a processing node (e.g. of a multimedia content distribution network), in a server platform which comprises one or more servers (which may be cloud-based), in an encoding (e.g. video encoding and decoding, video encoding, video codec, video compression) system, or in a video encoder.

As shown in Fig. 8, the apparatus 100 may comprise engines or functions that are similar to those comprised in the system 40 illustrated on Fig. 4, and may be configured to perform a method for processing an image in accordance with embodiments of the present subject disclosure.

The apparatus 100, which may comprise one or more computers, includes a control engine 101, a depth data computation engine 102, a first data processing engine 103, a second data processing engine 104, an image encoding engine 105, a data interface engine 106, and a memory 107.

In the architecture illustrated on Fig. 8, all of the depth data computation engine 102, first data processing engine 103, second data processing engine 104, image encoding engine 105, data interface engine 106, and memory 107 are operatively coupled with one another through the control engine 101.

In some embodiments, the depth data computation engine 102 is configured to perform various aspects of embodiments of one or more of the proposed methods for image processing as described herein, such as obtaining depth data of input image data. In some embodiments, the depth data computation engine 102 may be configured to compute a depth map. In some embodiments, the depth data computation engine 102 may be configured for using a machine learning algorithm configured for (monocular) depth data estimation.

In some embodiments, the first data processing engine 103 is configured to perform various aspects of embodiments of one or more of the proposed methods for image processing as described herein, such as performing a first data processing on input image data based on depth data of the input image data, as part of an image encoding workflow of data processing for encoding the input image data. Depending on the embodiments, the first data processing engine 103 may be configured for performing video pre-processing (including one or more of source cleaning, change of resolution, change of frame rate, change of bit depth) on an input video sequence comprising the input image data, pre-analysis processing (including one or more of complexity analysis, logo analysis, face detection analysis, and noise analysis) of input image data, or rate control processing (including one or more of psychovisual tunings, picture type decisions, scene-cut detections) on input image data.

In some embodiments, the second data processing engine 104 is configured to perform various aspects of embodiments of one or more of the proposed methods for image processing as described herein, such as performing a second data processing on input image data based on depth data of the input image data, as part of the image encoding workflow of data processing for encoding the input image data. Depending on the embodiments, the second data processing engine 103 may be configured for performing video pre-processing (including one or more of source cleaning, change of resolution, change of frame rate, change of bit depth) on an input video sequence comprising the input image data, pre-analysis processing (including one or more of complexity analysis, logo analysis, face detection analysis, and noise analysis) of input image data, or rate control processing (including one or more of psychovisual tunings, picture type decisions, scene-cut detections) on input image data.

In some embodiments, the image encoding engine 105 is configured to perform various aspects of embodiments of one or more of the proposed methods for image processing as described herein, such as encoding input image data according to an image encoding workflow based on data output by the first data processing engine 103 and the second data processing engine 104.

In some embodiments, the data interface engine 106 is configured to receive as input image data data, possibly as part of an input video data, and to output an encoded stream, under the control of the control engine 101.

The control engine 101 includes a processor, which may be any suitable microprocessor, microcontroller, Field Programmable Gate Arrays (FPGA), Application Specific Integrated Circuits (ASIC), Digital Signal Processing chip, and/or state machine, or a combination thereof. According to various embodiments, one or more of the computers can be configured as a multi-processor computer having multiple processors for providing parallel computing. The control engine 101 may also comprise, or may be in communication with, computer storage media, such as, without limitation, the memory 107, capable of storing computer program instructions or software code that, when executed by the processor, causes the processor to perform the elements described herein. In addition, the memory 107 may be any type of data storage or computer storage medium, coupled to the control engine 101 and operable with the data interface engine 106, the depth data computation engine 102, the first data processing engine 103, the second data processing engine 104, and the image encoding engine 105 to facilitate management of data stored in association therewith, such as, for example, a cache memory, a data farm, a data warehouse, a data mart, a datacenter, a data cloud, or a combination thereof.

In embodiments of the present subject disclosure, the apparatus 100 is configured for performing one or more of the image processing methods described herein. The apparatus 100 may in some embodiments be included in an image encoder or, depending on the embodiments, in a video encoder or a video codec.

It will be appreciated that the apparatus 100 shown and described with reference to Fig. 8 is provided by way of example only. Numerous other architectures, operating environments, and configurations are possible. Other embodiments of the node may include fewer or greater number of components and may incorporate some or all of the functionality described with respect to the apparatus components shown in Fig. 8. Accordingly, although the control engine 101, depth data computation engine 102, first data processing engine 103, second data processing engine 104, image encoding engine 105, data interface engine 106, and memory 107 are illustrated as part of the apparatus 100, no restrictions are placed on the location and control of components 101 - 107. In particular, in other embodiments, any of components 101 - 107 may be part of different entities or computing systems.

The proposed method may be used for the processing, for purposes of encoding or compression of input data which may correspond, depending on the embodiment, to an image, a picture, a video frame, or video data.

While the invention has been described with respect to preferred embodiments, those skilled in the art will readily appreciate that various changes and/or modifications can be made to the invention without departing from the spirit or scope of the invention as defined by the appended claims.

Although this invention has been disclosed in the context of certain preferred embodiments, it should be understood that certain advantages, features and aspects of the systems, devices, and methods may be realized in a variety of other embodiments. Additionally, it is contemplated that various aspects and features described herein can be practiced separately, combined together, or substituted for one another, and that a variety of combination and sub-combinations of the features and aspects can be made and still fall within the scope of the invention. Furthermore, the systems and devices described above need not include all of the modules and functions described in the preferred embodiments.

Information and signals described herein can be represented using any of a variety of different technologies and techniques. For example, data, instructions, commands, information, signals, bits, symbols, and chips can be represented by voltages, currents, electromagnetic waves, magnetic fields or particles, optical fields or particles, or any combination thereof.

Depending on the embodiment, certain acts, events, or functions of any of the methods described herein can be performed in a different sequence, may be added, merged, or left out all together (e.g., not all described acts or events are necessary for the practice of the method). Moreover, in certain embodiments, acts or events may be performed concurrently rather than sequentially.

**Claims**

1. A method for processing input image data of a set of images to be encoded, comprising:

    - Obtaining depth data of the input image data;
    - Performing a first data processing on the input image data based on the depth data of the input image data, wherein the first data processing is performed as part of an image encoding workflow of data processing for encoding the input image data;
    - Performing a second data processing on the input image data based on the depth data of the input image data, wherein the second data processing is performed as part of the image encoding workflow; and
    - Encoding the input image data according to the image encoding workflow based on data output by the first data processing and the second data processing.

2. A method according to claim 1, further comprising: obtaining a depth map of the input image data, wherein the depth data is comprised in the depth map.

3. A method according to any of the preceding claims, further comprising:

    - Determining a prediction of depth data of the input image data using a machine learning algorithm;
    - Wherein the depth data of the input image data is based on the prediction of the depth data.

4. A method according to claim 3, further comprising: performing a training phase of the machine learning algorithm during which the algorithm is provided with input training data comprising input data and corresponding depth data previously calculated.

5. A method according to any of claims 3 and 4, wherein the machine learning algorithm is configured for monocular depth estimation based on data of the input image data.

6. A method according to any of the preceding claims, wherein each of the first and second data processing is of a type comprised in a set comprising video pre-processing, pre-analysis processing, rate control processing, and encoding core processing.

7. A method according to any of the preceding claims, further comprising:

    Performing a first data conversion of data of the depth data to generate first converted depth data;
    Wherein the first converted depth data is inputted to the first data processing of the input image data.

8. A method according to any of the preceding claims, further comprising:

    Performing a second data conversion of data of the depth data to generate second converted depth data;
    Wherein the second converted depth data is inputted to the second data processing of the input image data.

9. A method according to any of the preceding claims, further comprising:
    processing the depth data for generating processed depth data usable as input data for performing one or more of the first data processing and the second data processing of the input image data.

10. A method according to claim 9, wherein processing the depth data comprises: segmenting the depth data.

11. A method according to any of claims 9 and 10, wherein processing the depth data comprises: partitioning the depth data to determine a partitioning of the input image data.

12. A method according to claim 11, wherein the depth data are partitioned based on one or more of a homogeneity criterion and a predetermined partitioning scheme for determining a partitioning of the input image data.

**13.** A method according to any of claims 11 and 12, wherein the depth data are segmented in order to generate segmented depth data that represent a plurality of areas, and the depth data are partitioned based on the segmented depth data.

**14.** An apparatus, the apparatus comprising a processor and a memory operatively coupled to the processor, wherein the apparatus is configured to perform a method according to any of claims 1 to 13.

**15.** A computer program product comprising computer program code embodied in a computer readable medium, said computer program code comprising instructions to, when provided to a computer system and executed, cause said computer to perform a method according to any of claims 1 to 13.

**Video pre-processing**
(source video cleaning algorithms + change of resolution / frame rate / bit depth) —11

**Pre-analysis**
(Complexity analysis, Logo, face detection, grain) —12

**Rate control**
(Psychovisual tunings, picture type decisions, scene-cut detections) —13

Decision-related information
(quantizers, picture) 14

Encoding cores

Decision

| MPEG-2 | AVC | HEVC | AV1 | VVC |

10

Bit stream——15

## FIG. 1

Obtaining depth data of the input image —21

Performing a first data processing on the input image based on the depth data of the input image, as part of an image encoding workflow of data processing for encoding the input image —22

Performing a second data processing on the input image based on the depth data of the input image, as part of the image encoding workflow —23

Encoding the input image according to the image encoding workflow based on date output by the first data processing and the second data processing —24

20

# FIG. 2

FIG. 3

FIG. 4

(1)

(2)

FIG. 5a

(1)

(2)

FIG. 5b

FIG. 5c

FIG. 5d

(1)

(2)

FIG. 5e

FIG. 6

**FIG. 7a**

**FIG. 7b**

102 — □

103 — □

104 — □

105 — □

106 — □

107 — □

□ — 101

100

## FIG. 8

Europäisches Patentamt
European Patent Office
Office européen des brevets

# EUROPEAN SEARCH REPORT

**Application Number**

EP 23 30 7152

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/092856 A1 (MAMMOU KHALED [CA] ET AL) 2 April 2015 (2015-04-02) | 1,3-9, 14,15 | INV.<br>H04N19/85 |
| Y | * claims 1-11; figure 3 * | 2,10-13 | |
| X | US 2015/296198 A1 (PARK GWANG HOON [KR] ET AL) 15 October 2015 (2015-10-15)<br>* paragraph [0054] – paragraph [0057]; figures 5, 6D * | 1,14,15 | |
| A | US 11 582 485 B1 (CHERIAN ANOOP [US] ET AL) 14 February 2023 (2023-02-14)<br>* page 20 – page 20 * | 3 | |
| Y | US 7 203 356 B2 (CANESTA INC [US])<br>10 April 2007 (2007-04-10)<br>* page 12 – page 12 * | 12 | |
| Y | WO 2023/118259 A1 (INTERDIGITAL VC HOLDINGS FRANCE SAS [FR])<br>29 June 2023 (2023-06-29)<br>* claims 1-3 * | 2,10-13 | **TECHNICAL FIELDS SEARCHED (IPC)**<br><br>H04N |

The present search report has been drawn up for all claims

| Place of search | Date of completion of the search | Examiner |
|---|---|---|
| Munich | 22 January 2024 | Giuliani, Nicola |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 30 7152

This annex lists the patent family members relating to the patent documents cited in the above-mentioned European search report.
The members are as contained in the European Patent Office EDP file on
The European Patent Office is in no way liable for these particulars which are merely given for the purpose of information.

22-01-2024

| Patent document cited in search report | | Publication date | Patent family member(s) | | Publication date |
|---|---|---|---|---|---|
| US 2015092856 | A1 | 02-04-2015 | US | 2015092856 A1 | 02-04-2015 |
| | | | US | 2020068213 A1 | 27-02-2020 |
| US 2015296198 | A1 | 15-10-2015 | KR | 20150091299 A | 10-08-2015 |
| | | | KR | 20210036414 A | 02-04-2021 |
| | | | US | 2015296198 A1 | 15-10-2015 |
| | | | WO | 2014084613 A2 | 05-06-2014 |
| US 11582485 | B1 | 14-02-2023 | NONE | | |
| US 7203356 | B2 | 10-04-2007 | NONE | | |
| WO 2023118259 | A1 | 29-06-2023 | NONE | | |

EPO FORM P0459

For more details about this annex : see Official Journal of the European Patent Office, No. 12/82